# EUROPEAN PATENT APPLICATION

(11) **EP 2 479 495 A1**
(43) Date of publication of application: **25.07.2012**
(21) Application number: 11002375.1
(22) Date of filing: 22.03.2011
(51) Int. Cl.: F23M 7/04, F23G 5/50, B01D 53/34, F23G 5/00, F23G 5/30, F23G 5/46, F23J 15/04, F23J 15/02

(54) **A multipurpose biologic sludge, organic wastes and biomasses cogeneration incineration plant and process developped therein**

(30) Priority: 19.01.2011 IT MI20110045
(71) Applicant: Technelep S.R.L., 20152 Milano (MI) (IT)
(72) Inventor: Bobbiesi, Giuseppe, 20152 Milano (IT); Scalari, Mauro, 46010 Campitello (MN) (IT)
(74) Representative: Beneduce, Gianna

(57) **Abstract**

A multipurpose cogeneration incineration plant having a relevant construction simplicity, operation safety and flexibility, which utilizes as fuels biologic sludge, and/or organic wastes, and /or biomasses in minute pre-dried pieces, is described.

The process is also described which develops therein and by which electric energy is produced while carbon dioxide together with nitrogen and sulfur oxides and other pollutants present in the combustion gases are knocked down and an agriculture conditioner is produced.

## Description

### Brief description of the invention

The object of the present invention is a multipurpose cogeneration incineration plant utilizing as fuels, biologic sludge, and/or organic wastes and/or biomasses, in pre-dried small pieces, with a fluid bed under pressure combustor, being the pressurized combustion gases directly expanded into two independent equipment, one turbocharger to produce the combustion compressed air, and a turboalternator made by assembling a turbocharger with its compressor wheel removed and assembled to an high speed alternator and inverter to produce electric energy. Said plant is characterized by a relevant construction simplicity and, consequently, by a reduced capital cost. It is provided with particular safety devices, it secures operation flexibility and environment safeguard, like as the possibility to change the rate of the produced electric energy to the heat energy, to knock down the carbon dioxide as well as the nitrogen and sulfur oxides and other pollutants in the combustion gases and to produce an agriculture conditioner.

It is a further object of the present invention the process which develops in the plant starting from the above mentioned fuels combustion, followed by the expansion in turbines of the combustion gases, relevant thermal and electric energy production and knocking down of carbon dioxide together with other pollutants from discharged gases to the atmosphere and producing an agriculture conditioner such as the calcium carbonate defecation, meanwhile securing a high rate of produced electric energy.

### State of the art

The majority of the existing cogeneration incineration plants nowadays in operation bums urban garbage in combustion chambers of different types, being all of them provided with steam boilers, using the produced steam to feed steam turbines to produce power and requiring large quantities of cold water to condensate the exhausted steam. They require, beyond high capital investment, high operation costs like as cold water consumption and loss of the steam condensation latent heat representing a relevant rate of the total available steam heat energy, so lowering the rates of the produced electric energy. Besides all, said cogeneration incineration plants need to be provided with several auxiliary facilities like as the treatment of the water to feed the boilers, combustion gases relevant treatment processes , garbage treatment to get a convenient specific heat, to simplify the ash discharge and to manage the long lasting transition stages of combustion start-up to the required correct process working conditions and mainly the shut-down operations with a relevant material mass into the plant, still burning under transition conditions difficult to control. Besides all, the operation of so many added facilities is itself heavy to manage, because of their requirements and complexity, like as steam boiler maintenance due to fouling and corrosion, steam pipes fittings and valves maintenance, mechanical problems to the grids, high quantities of wastes and of heavy non combusted materials and ash, frequently requiring large landfills for their disposal. Due to whatsoever above mentioned, such types of incinerations plants are not suitable to use materials like as biologic sludge, other organic wastes and biomasses in minute pieces or powder and they are not suitable to be used to small companies and farms.

Besides the above mentioned traditional incineration plants, there are few others, for the combustion of biomasses to produce power mainly, which provide for the combustion under pressure and the direct combustion gases expansion into turbines, so to get either compressed air for the combustion or electric energy as well. Inside this group we have selected and analyzed the following patents and patent applications.

GB 595,947 (1947) in the name of BBC Brown Boveri & Cie describes a wastes drying, their gasification under pressure and the combustion gases entering another room or the wastes combustion into a specific vertical rotary combustor, with combustion gases cooling by a secondary air flow and their expansion in a tailor made turbine, fitted to a compressor and to an alternator, one sole shaft system. Liquid slag is foreseen instead of ash.

DE 966 644 (1957) in the name of BASF AG describes a static under pressure combustion system with subsidiary combustion gases cooling by air injection and their direct use in a turbine connected to a compressor and to an alternator, one sole shaft system, with regeneration. Fuel loading is made by a screw conveyor from a pressurized tank, meanwhile the combustion chamber ash discharging is made by a screw conveyor into a pressurized vessel.

U.S.3,589,313 (1971) in the name of Smith Richard D. et al. describes a very complex integrated system for solid waste treatment, consisting in drying and pyrolysis of the dried material carried out in a static fluid bed, de-dusting of the generated gas in a cyclone, plus a possible electro-filter and direct use of the gas produced in the combustion chamber of a tailor made turbine, one sole shaft, fitted to a compressor and an alternator.

EP 0 076 484 A1 (1983) in the name of EURATOM describes a pressurized biomasses pyrolysis equipment with a chamber for the generated gas combustion to fuel a tailor made turbine, having a high pressure stage to power the combustion air compressor turbine and a second low pressure stage (powered by the expanded gases exiting the first stage) to power an alternator, clearly using the same quantity of expanded combustion gases but at different pressures and pressure drops. The fuel feeding is made by special screws.

WO 94/15083 A1 (1994) in the name of RBS Electric Inc. USA describes a two parallel vertical biomasses pressurized combustion chambers interconnected at the bottom, with the fuel fed into the first combustion chamber by a very complex star valves row with the combustion gases passing a de-dusting cyclone and then expanding into a tailor made mono shaft turbine powering a compressor and an alternator after being cooled by water or steam injection. Calcium oxide or hydroxide is used to higher the ash fusion temperature to avoid their solidification and sticking on turbine blades. It is detailed a computerized control system and some problems are focused like as control of the combustion temperature and of turbine overrunning due to alternator load fall.

U.S. 5,720,165 (1998) in the name of Rizzie et al. describes means to prepare biomasses, to load them into a silos, put the silos under pressure and load from it a feeding hopper that, by a special pneumatic conveyor located at its bottom, feeds a complicated special pressurized chamber combustor, preferably without refractory and made in inconel. Biomasses are burned to produce hot pressurized combustion gases whose temperature is controlled by injecting water or steam into the gases, the powder in the gases are reduced by a special cyclone with an overpressure valve placed on the exit duct, then powering a mono-shaft turbine fixed to the compressor and alternator. The control of the plant is obtained by a computerized system.

GB 2 348 695 A (2000) in the name of James Engineering describes biomasses combustion assisted by a fossil fuel to produce hot compressed combustion gases to be directly used in automotive road or marine turbochargers suitable to be connected to compressors and alternators. The combustion is performed in a special cyclone type burner, with an air jacket, fed from a storage tank, by a screw conveyor, a star valve and a pneumatic conveyor.

The above mentioned plants and equipment are referred to complex systems, including expensive construction and poor reliability devices like as in series pressurized gas tide star valves and screw conveyors, notoriously unsuitable to be and keep gas pressure tide, to feed the fuels into the pressurized combustion chambers. In no one of the listed documents it is mentioned the knock-down of the pollutants from the combustion gases, powders excluded, and, specifically, neither the carbon dioxide knock-down, representing the major pollutant in the combustion gases, nor its utilization to produce a viable marketable product.

### Description of the invention

The object of the present invention is a multipurpose cogeneration incineration plant utilizing as fuels biologic sludge and/or organic wastes and/or biomasses in minute pieces, conveniently pre-dried up to get a specific heat of not lower than 2,200 Kcal/Kg, preferably 2,800-4,000 Kcal/Kg, easily constructible in several sizes and, preferably, but not exclusively, for generated electric power under 1 electric Mw, whereas it is performed a combustion under pressure followed by a direct expansion of the pressurized hot combustion gases into two different machine groups, a commonly market available turbocharger, road or marine automotive type, to produce the compressed combustion air, and a turboalternator of simple construction, derived from a turbocharger, similar to the first one, but with its compressor wheel removed and assembled to a high speed alternator with inverter, to produce electric energy. These machines are provided with all safety devices and secures high operation flexibility, like as to shift the combustion gases flow between the two above mentioned groups of machines, so to secure the possibility to change the rates of electric and thermal energy produced to satisfy different requirements, avoiding turbines over-running as well.

One more relevant feature of the object of this invention is represented by the process which develops in the cogeneration incineration plant following the combustion of the biologic sludge and/or organic wastes and/or biomasses in minute pieces and provides the knock down of carbon dioxide as well as other pollutants present in the combustion gases following the reaction with an hydrolyzed organic waste or sludge containing calcium hydroxide and producing defecation calcium carbonate that is an agriculture soil conditioner according to the D.Lgs 75/2010 Italia and CEE 834/2007 and 889/2008 regulations, meanwhile securing environment safeguard.

The cogeneration incineration plant is formed by: a fluid bed combustor (1) operating under pressure; a fuels feeding system into the combustor (1) by gravity fall from two or more pressurized hoppers (5) throughout a sloping feeding pipe; a cyclone or cyclones battery (8) to knock-down the larger dust particles; a possible quantity of primary air injection into the combustion gases exiting the cyclone (8) to adjust their temperature to the value acceptable to the ceramic cartridges filter (9) and to the turbocharger (12)(13) and turbo-alternator (14)(16) groups; a self-cleaning ceramic cartridges filter (9) to knock-down the dust particles sizing over 1 micron, with 99,90% efficiency; a vessel (10) under pressure for ash recovery, cyclically unloadable; safety devices (3) distributed on the whole walls of the pressure vessels operating under high temperatures to control their surface temperature; two independent equipment groups, a turbocharger (12)(13), commonly available in the commerce, road or marine automotive derived, and a turbo-alternator (14)(16), of simple construction, derived from a turbocharger similar to the above one but with its compressor wheel removed and assembled to a high speed alternator with inverter (17), for the power-factor improvement and frequency control, being said machines selected to operate in the range of absolute pressures , compressed air and combustion gases mass flow falling within the field of maximum yields according to the manufacturer's "maps" and diagrams; combustion gases flows control and shut-down devices (11) for the two above mentioned groups of equipment; an optional hydraulic station (26) to supply lubrication oil to the bearings of the shafts of the two groups (12)(13) and (14)(16) whenever they are not provided with air bearings from the manufacturers; a tube bundle heat exchanger (18), preferably U tube type, to recover heat from expanded combustion gases, provided with two independent tube side passes, whose duty being to maximize regeneration whenever electrical energy is preferred or, otherwise, to maximize the produced heat energy, by an intermediate fluid even, whenever it is required; a carbon dioxide and other pollutants in the combustion gases knock-down reactor (19); a guard scrubber (21) utilizing a calcium hydroxide solution with purge and recovery of the spent solution into the reactor (19); an auxiliary start-up and emergency support standard type burner (4) using a commonly available liquid or gas fuel; one or more pressurized start-up air storage tank (24), air being supplied by a standard small on/off piston compressor (25), used to automatically clean the filter (9) cartridges and to supply the start-up burner (4) too; a power and control center (27) provided with a PLC, with specific software installed, for computerized cogeneration incineration plant full control.

For the sole case of operation of the cogeneration incineration plant in sites where no any other source of power is available, a small generator of any type or another substitution power source should be available to the plant start-up and the safety devices activation. More in detail the equipment and devices of the cogeneration incineration plant of the invention are described in the following:
- the vertical fluid bed under pressure combustor (1) is preferably of "boiling" type for the small and medium-small sizes, or "turbulent" and/or "recycling" for the medium and medium-large sizes ones and it has a cylinder geometry with three different size diameters, the larger one being in the equipment upper part to allow for reducing combustion gases flow speed so favoring a primary gravity separation from the gases flow of carried larger solid particles, mainly important for the "boiling" fluid bed type. The working pressure is 3.0 to 6.0 absolute bar. The resisting combustor (1) structure consists in a steel shell, in flanged or welded sectors or solid wall, with inner refractory, designed and manufactured not to allow the temperature to go over 60°C on the outside steel shell.
   Said combustor (1) has inside, in the lower part, a grid to support the bed material to be fluidized, with a distributor of the fluidization and primary combustion air. The combustor (1) geometry is such to allow for one fluidization and combustion, one post-combustion and one calm zone according to the different zones diameters. The exiting combustion gases duct is vertical and it has an upper end provided with an explosion door (2) self opening whenever an overpressure is reached or in case of explosion, so releasing the overpressure but remaining linked to the duct to prevent any accident due to door falling down. The combustor (1) has a nozzle to fix an auxiliary burner (4) for operation start-up and emergency; fittings and pipes with a suitable slope to allow for fuel gravity feeding from the hoppers (5), another nozzle and pipe, conveniently sloped, for the discharge, by overflow, of ash and solid particles of the support materials into the ash storage vessel (10); a nozzle and pipe, with appropriate slope, to recycle the particles separated by the cyclone (8); nozzles and pipes for the injection of compressed air into the fluidization and primary combustion zone and for the injection into the post-combustion zone; nozzles and fittings to fix instrumentation; one surface temperature sensors safety system (3), generally by PT 100, uniformly distributed on the whole external surface of the combustor (1) connected to specific instrumentation to fully control the external shell surface of the combustor (1) to alarm the risk of temperature higher than the allowed ones, due, to the inner refractory failures creating consequent explosion risks; sights, inspections and cleaning handholes, manholes to load and unload the fluid bed support material; usual temperature and pressure instruments fittings and spares nozzles;

- the hoppers (5) operate under pressure, are in carbon steel, in the number of two or more, to store the minute fuel materials to be fed into the combustor (1), with a bottom such a geometry to avoid material bridges formation. They are kept under pressure by the compressed process air drawn before regeneration to avoid too high temperatures. They are provided with a wide upper manhole for manual or automated fuel materials loading, a control system operated star valve (6) at the bottom, to meter the supplied fuel to the combustor (1), a shut-down ball valve (7) to be shut whenever the hoppers (5) has to be depressurized for loading under atmospheric pressure, a combustor (1) feeding pipe with a proper geometry and a slope over 60°, on the horizontal, to allow for fuel gravity feeding, sight glasses for sight control, an automatic level control and indicator, with such a volume to secure combustor (1) feeding for the designed time and, generally, 6 to 12 hours;
- the auxiliary and emergency burner (4) is of a standard type for combustion, under pressure, of standard fluid fuels and it can assist combustion also in case of very short solid fuel feed lacks from the hoppers (5);
- the ash storage tank (10) operates under pressure and is made in carbon steel, with refractory inside, and it is connected to the combustor (1) by an overflow discharge pipe self controlling the high of the fluid bed at the designed high and it is also connected to the discharge pipe from the bottom of the ceramic cartridges filter (9) to receive the filter (9) collected powders; in the bottom it has a chamber with clapet or guillotine valves, such to allow for cyclically ashes and powders unloading;
- the cyclone (8) or cyclones battery, operating under pressure, for primary larger powders separation has a high efficiency and minimum pressure drop, it is made in carbon steel shell with internal refractory, meanwhile the internal outflow pipe to the ceramic cartridges filter (9) is in high temperature resisting stainless steel without refractory, to minimize size and pressure drop; the cyclone (8) bottom is provided with a discharge pipe, with a slope over 60°, on the horizontal, entering the combustor (1), allowing for the gravity recycling into the combustor (1) fluid bed of the separated particles; the cyclone (8) outside steel shell surface is provided with security temperature sensors (3), as described for the combustor (1);
- the ceramic cartridges filter (9) for the fine particles separation, operating in pressure, is made in carbon steel shell with internal refractory lining, it is self cleaning by counter pressurized air flow of the ceramic cartridges; it is connected to the ash tank (10) by an over 60° slope, on the horizontal, pipe with a clapet type valve, or another suitable valve, at the edge to favor the gravity fall of the powders into the tank (10); the filter (9) outside steel shell surface is provided with security temperature sensors (3), as described for the combustor (1);
- the clean compressed combustion gases enter into turbocharger (12)(13) and turboalternator (14) (16) groups by feeding a manifold provided with automatic control and shut-down valves (11), made to minimize the pressure drop, allowing for gases flows distribution and control to the turbocharger (12)(13) and to the turboalternator (14) (16) and for the turboalternator (14) (16) flow shut-down in case of alternator (16) charge loss, to prevent turboalternator (14) (16) overrunning;
- two independent machine groups, a standard market road or marine automotive derived turbocharger (12)(13) and a turboalternator (14)(16), similar to the above turbocharger but with its compressor wheel removed and assembled to a high speed alternator, with inverter (17), all generally rotating at a speed of 20,000 to 80,000 rpm and, preferably, of 40,000 to 60,000 rpm, generally depending on their size. The first machine group, the turbocharger (12)(13), complete with its standard overpressure valve, has the duty to compress the air required for the combustion and for the other mentioned uses from the atmospheric to the operation pressure. Said turbocharger (12)(13) is selected among those turbocharges which are able to provide high compression ratios, 1/4-1/5.5 or over, as absolute pressures, and the machines (12) and (14) being made in materials suitable to operate under high temperature and abrasion conditions, and designed to operate within the area of maximum machine yields (76-80%) according to the manufacturer "maps" and diagrams. In the second group of machines, the turboalternator (14)(16), the two machines (14) and (16) are connected to each other by a special balanced flexible joint (15), suitable not to transfer any radial or axial force to the shafts, all the devices rotating at the same speed;
- in the cogeneration incineration plant of the invention it might be included an hydraulic station (26) to provide lubrication oil to the bearings of the turbocharger (12)(13) and of the turboaltemator(14)(16) shafts whenever the same are not provided with air bearings from the manufactures, lubrication oil being circulated by gears pumps and the control of their temperature and pressure being automatically secured according to operating temperature and pressure of the supplied machine, also provided with an electrical start-up device in case of very low temperature and water or air cooled cooler for temperature control, whenever in operation;
- the heat exchanger/regenerator (18) is preferably U tube bundle type. In the shell side pass the expanded combustion gases for easier cleaning, meanwhile in the tube side passes the compressed air to be overheated/regenerated. The tube side may be divided into two independent passes: in the first one may pass the compressed air and in the second one another fluid, if any, to transfer part of the heat energy, if required, for any purpose and for more operation flexibility;
- the reactor (19), wherein the knock-down of the carbon dioxide from the combustion gases upon expansion takes place, is preferably of axial type, with high speed rotating shaft with blades or plugs; it utilizes hydrolyzed organic sludge or other similar hydrolyzed organic material or wastes and calcium hydroxide, so favoring, with low combustion gases pressure drop, the knock-down of the carbon dioxide as well as other pollutants, like as nitrogen and sulphur oxides and particulate, finally producing the agriculture conditioner "Defecation Calcium Carbonate" according to the in force D.Lgs.75/2010 Italia and Cee regulations 834/2007 and 889/2008;
- a centrifugal fan (20) to suck the combustion gases exiting the reactor (19) and to blow them into the scrubber (21);
- a scrubber (21) suitable to operate with calcium hydroxide solution, provided with a system to purge the suitable quantity of recycling semi-spent solution containing calcium hydroxide and some calcium carbonate due to the reaction of the residual carbon dioxide into the gases exiting the reactor (19) with the calcium hydroxide of the recycling solution:
   purge recovered by the recycling pump (22) feeding the reactor (19);
- a chimney (23) to discharge the cleaned combustion gases into the atmosphere;
- one or more compressed air storage tanks (24) for the cogeneration incineration plant start-up, specifically for the very first fluid bed fluidization and the auxiliary burner (4) and turbocharger (12)(13) very first feeding, for the safety devices first activation and then for filter (9) cartridges cleaning in operation, provided with a small standard commonly marketed lubricated piston compressor (25) to supply the compressed air to be stored;
- a small standard type power diesel generator or any other suitable power source is necessary for the sole case of cogeneration incineration plant operating on sites without electrical network connection, to provide the required power for the start-up and for the safety devices initial activation;
- a power and control center (27), for local and remote control, provided with a PLC to fully operation monitoring, supervising and data recording, so allowing for full operating conditions tracing, containing also the required devices for the electrical network connection, if any. Local instrumentation including flows, temperatures, pressures, vibrations, levels sensors and instruments to detect, in the discharged combustion gases, residual pollutants as required by the local regulation and by the control Authority, all connected to the power and control center (27).

According to the process of the invention biologic sludge and/ or organic wastes and /or biomasses in small pieces, conveniently pre-dried up to have a specific heat not lower than 2,200 kcal/kg, are charged into the hoppers (5) and, after these ones have been pressurized by means of compressed air, are introduced by gravity in the combustor (1), operating at 3.0-6.0 absolute bar, preferably 4.0-5.5 absolute bar, and at a temperature up to 1,000°C, preferably 850-950°C. The combustion air is sent to the combustor (1) by the turbocharger (12)(13). The combustion gases, produced in the combustor (1), exit from the top of the same through a vertical duct provided with the explosion door (2) and are subjected to a substantial direction change to avoid deposit of powder in the pipe between the combustor (1) and the cyclone (8), then they pass through the cyclone (8) to knock-down a first powder portion and, finally, a second powder portion is detained in the ceramic cartridges filter (9), self-cleaning by means of a counter compressed air flow, so that the powders having size higher than 1 micron, they contain, are knocked down with an efficiency of 99.90%. The powder separated in the cyclone (8) are recycled to the combustor (1), by gravity, while those separated by the filter (9) fall, by gravity, in the tank (10). The combusted gases, practically free of powders, are divided in two flows controlled by the regulations devices (11) according to the production requests, and then are expanded in two groups of machines (12)(13) and (14)(16) with production of compressed air in the turbocharger (12)(13), air which is used either for the combustion in the combustor (1) or for other uses, and electrical energy production in the turboalternator (14)(16), energy which is exported from the plant. The combustor (1), the filters (8) and (9) and the tank (10) for powder recovery, are internally refractory lined to secure, on the external surface of the resistant body, a temperature not higher than 60°C. The combustion reaction in combustor (1) is carried out, preferably in a fluid bed of "boiling type" for the small and medium-small sizes and in a fluid bed of "turbulent" and "recycling" type for the medium and medium-large sizes. The combustion gases are then cooled in a heat exchanger/regenerator (18), with heat recovery, and sent to the reactor (19),where, with a low pressure drop, the carbon dioxide, therein contained, reacts with calcium hydroxide in the presence of hydrolyzed organic sludge, other similar hydrolyzed organic materials and wastes to produce calcium carbonate useful as agriculture conditioner, said reaction being favoured by the high turbulence created inside the reactor (19) by blades or plugs. The combustion gases, substantially free from carbon dioxide and sulphur and nitrogen oxides as well as other possible pollutants, are sent to the guard scrubber (21) to eliminate another quantity of residual pollutants, if any, by a further treatment with calcium hydroxide, and then sent to the atmosphere while the purge of calcium hydroxide solution, containing possible other quantity of knocked down pollutants, is recycled to the reactor (19).

The cogeneration incineration plant of the invention has an overall produced electric energy yield of 25%-35%, generally 30%, and contemporarily a thermal energy yield of 60%-45%, whenever thermal energy is required to pre-dry the materials to be fed into the plant as fuels and an overall produced electric energy yield of 42%-48%, generally 45%, and contemporarily a thermal energy yield of 30%-25% whenever high specific heat material is fed into the plant as fuel. All the cited values are referred to the total thermal energy of the materials fed as fuels.

The enclosed drawings are given to schematically illustrate the object of the invention.

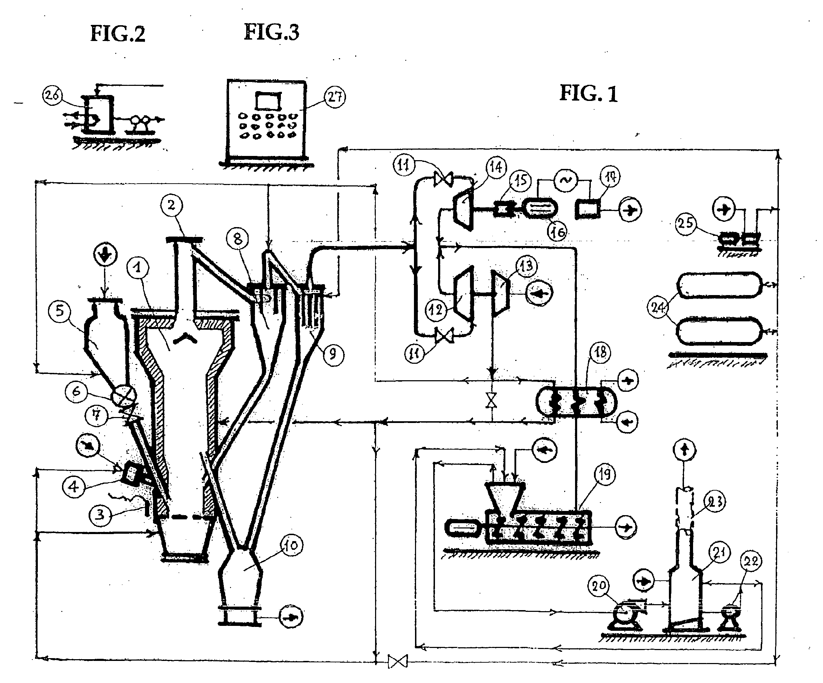

Figure 1 is a schematic flow-sheet showing the fuel feeding hoppers (5) provided with a star valve (6) to meter the fuel fed into the combustor (1) from which exit the hot compressed combustion gases containing solid particles separated by a cyclone (8) and, subsequently, by a ceramic cartridges filter (9), said particles being discharged, by gravity, respectively, into the combustor (1) and into the ash tank (10). The gases, practically free from the solid particles, enter a manifold distributing them to the groups of machines (12)(13) and (14)(16) where, after expansion, they are first conveyed, to the heat exchanger/regenerator (18), then to the reactor (19), where the carbon dioxide reacts with the calcium hydroxide to produce an agriculture conditioner, then to the safeguard scrubber (21) and finally to the chimney (23), injecting them into the atmosphere, upon being heavily cleaned from the carbon dioxide, particulate and other pollutants. In Figure 1 there are also evidenced the main ducts and pipes of the plant and the points of loading and unloading of the materials, respectively, plant feeding and produced agriculture conditioner.
Figure 2 schematically shows the lubricating station (26) of the cogeneration incineration plant and
Figure 3 shows the power and control center (27) of the cogeneration incineration plant. Both lubricating station (26) and the power and control center (27) might be located reasonably far from the cogeneration incineration plant.

The cogeneration incineration plant of the invention may conveniently suit several industrial activities like as waste waters treatment plants to utilize the biologic sludge and other plants producing similar wastes, plants producing other non chlorine containing wastes, biogas plants to utilize the solid fraction digested materials, facilities requiring either heat or electric energy, farms to utilize waste organic materials, small and medium-size communities owing biomasses sources, bio- and phyto-remediation activities to utilize oil polluted hot spots or harvested biomasses, etc.

The following example has the purpose to describe an embodiment of the invention without limiting the scope thereof.

### Example

In a 12x2.5 m size skid mounted cogeneration incineration plant as above described, 120 Kg/h of pre-dried up to 90% dry material biologic sludge are fed. The plant proved stable working conditions, producing over 100 Kwh/h of electric energy and a heat energy sufficient to dry the quantity of sludge to be fed from 30% up to 90% totaling 220 thermal Kwh/h and an amount of agriculture conditioner of 200 to 300 Kg/h.

The same plant, whenever no heat was required to dry the fed sludge, being the same sludge already dried, produced over 180 Kwh/h of electric energy, 110 Kwh/h of heat energy and a quantity of 200 to 300 Kg/h of agriculture conditioner.

## Claims

1. A multipurpose cogeneration incineration plant, pressure combustion and combustion gases directly expanded in turbines type, utilizing as fuel biologic sludge and/or similar organic wastes and/or biomasses properly pre-dried and sized in minute pieces, **characterized by** the fact that is constituted by: two or more hoppers (5) under pressure, provided with suitable control star valves (6) and shut-down ball valves (7) having the bottom geometry suitable designed and the feeding duct to the combustor (1) with a slope over 60° on the horizontal; the vertical fluid bed under pressure combustor (1) having cynlindric structure, with tree different diameters whose sizes decrease towards the bottom provided with an explosion door (2) located and secured on the vertical gas exit vertical pipe, said combustor (1) being also provided with an auxiliary start up burner (4); the cyclone (8) and the self cleaning ceramic cartridge filter (9) located downstream the cyclone (8), both being provided with dischage pipes having a slope over 60° on the horizontal, connecting the cyclone (8) with the combustor (1) and the self cleaning filter (9) with the tank (10) respectively, the latter being in turn connected, by overflow with the combustor (1); automatic control and shut-down valves (11) of the combustion gas flow from the filter (9) to the two indipendent groups of machines (12)(13) and (14)(16); the two indipendent high speed groups of machines, the turbocharger (12)(13) and the turboalternator (14)(16) with the inverter (17), being, both of road or marine automotive type and machines (12) and (14) made of material resistant to the high temperatures and abrasion, and the machines (14) and (16) connected together by means of the balanced flexible joint (15); a suitable heat exchanger/regenerator (18); the reactor (19); the fan (20)and the suitable scrubber (21); the chimney (23); the compressed air start up system consisting of one or more tanks (24) in pressure; the system of regulation and safety devices (3) and (27) for all the plant operating parameters.

2. The multipurpose cogeneration incineration plant according to claim 1, **characterized by** the fact that the combustor (1), the cyclone (8), the filter (9) and the tank (10) have a shell made in carbon steel inside lined with a refractory and operate at a pressure from 3.0 to 6.0 absolute bar and at a temperature up to 1,000°C.

3. The multipurpose cogeneration incineration plant according to claim 1 or 2, **characterized by** the fact that the heat exachanger/regenerator (18) is formed by U tube bundle where in the shell side of it the combustion gases flow and in the tube side the compressed air flows.

4. The multipurpose cogeneration incineration plant according to claim 1 or 2, **characterized by** the fact that the heat exachanger/regenerator (18) is formed by two indipendent U tube bundles where in the shell side the combustion gases flow and in the first tube bundle the compressed air flows and in the tube side of the second tube bundle a different fluid flows.

5. The multipurpose cogeneration incineration plant according to one of the previous claims, **characterized by** the fact that the reactor (19) is of axial type with high speed rotating shaft with a mixing device selected from blades or plugs.

6. A multipurpose cogeneration incineration process under pressure of biologic sludges and/or similar organic wastes and/or biomasses suitably pre-dried and sized in minute pieces having a specific heat not lower than 2,200 kcal/kg, **characterized by** the fact that the above mentioned fuels are submitted to combustion in the combustor (1) at a pressure of from 3.0 to 6.0 absolute bar and at a temperature lower than 1,000°C and that the particles contained in the combusted gas are knocked-down by means of the cyclone (8) and subsequently, with an efficiency of 99.90% on the particles over 1µ size by means of the ceramic cartridge filter (9) and that the particles separated in the cyclone (8) are recycled, by gravity, to the combustor (1) and those separated in the filter (9) sent, by gravity, into the tank (10) and that the combustion gases are separated into two flows regulated by regulations devices (11), expansed into two groups of machines (12)(13) and (14)(16), the turbocharger (12)(13) producing compressed air, and the turboalternator (13)(14) producing electric energy, and that the temperature of the steel resistant body external surface of the combustor (10), of the filters (8) and (9) and of the tank (10) cannot exceed 60°C, and that the combustion gases are cooled in the regenerator/exchanger (18) and sent to the reactor (19) where they are treated with hydrolized organic wastes and sludge containing calcium hydroxide to provide a product consisting of a defecation calcium carbonate and that the resulting gases, substancially free from carbon dioxide and other pollutants, are sent to the guard scrubber (21) for a further treatment with calcium hydroxide and then sent to the atmosphere and the possible pollutants separated in the scrubber (21) recycled to the reactor (19).

7. The multipurpose cogeneration incineration process according to claim 6, **characterized by** the fact that the combustion reaction in the combustor (1) is carried out at a temperature selected in the range 850-900°C and under a pressure selected in the range 4.0-5.5 absolute bar.

8. The multipurpose cogeneration incineration process according to claim 6 or 7, **characterized by** the fact that the combustion reaction is carried out in a fluid bed of boiling type for the small and medium-small size.

9. The multipurpose cogeneration incineration process according to claim 6 or 7, **characterized by** the fact that the combustion reaction is carried out in a fluid bed of turbolent and recycling type for the medium and medium-big size.

10. The multipurpose cogeneration incineration process according to any of the previous claims 6-9, **characterized by** the fact that the defecation calcium carbonate is an agriculture soil conditioner according to the D.Lgs. 75/2010 Italia and CEE 834/2007 and 889/2008 regulations.
